# EUROPÄISCHE PATENTSCHRIFT

(11) **EP 1 609 351 B1**
(45) Veröffentlichungstag und Bekanntmachung des Hinweises auf die Patenterteilung: **30.05.2007**
(21) Anmeldenummer: 05104847.8
(22) Anmeldetag: 03.06.2005
(51) Int. Cl.: A01D 43/08

(54) **Erntevorsatzantrieb**
Harvester head drive
Entraînement d'une tête de récolte

(30) Priorität: 21.06.2004 DE 102004029953
(43) Veröffentlichungstag der Anmeldung: 28.12.2005
(73) Patentinhaber: DEERE & COMPANY, Moline, Illinois 61265-8098 (US)
(72) Erfinder: Pirro, Peter, Dr., 66917 Wallhalben (DE); Hofer, Jürgen, 66501 Grossbundenbach (DE); Bohrer, Stefan, 66606 St. Wendel (DE); Schäfer, Rainer, 66482 Zweibrücken (DE); Clauss, Steffen, Dr., 66509 Rieschweiler-Mühlbach (DE)
(74) Vertreter: Holst, Sönke

(56) Entgegenhaltungen:
- EP-A- 1 396 184
- DE-A1- 19 606 388
- US-B2- 6 666 007

## Beschreibung

Die Erfindung betrifft eine Kombination aus einer landwirtschaftlichen Erntemaschine und einem Erntevorsatz, mit:
einem Aufnahmeförderer des Erntevorsatzes, der antreibbar ist, um Erntegut mit einer ersten, veränderbaren Geschwindigkeit aufzunehmen,
einem Abgabeförderer des Erntevorsatzes, der antreibbar ist, um von dem Aufnahmeförderer aufgenommenes Erntegut mit einer zweiten, veränderbaren Geschwindigkeit anzunehmen, zu fördern und abzugeben, und
einem in einem Einzugskanal der Erntemaschine angeordneten Einzugsförderer, der antreibbar ist, um Erntegut von dem Abgabeförderer mit einer dritten, veränderbaren Geschwindigkeit anzunehmen, zu fördern und an eine Erntegutbearbeitungseinrichtung abzugeben, wobei die dritte Geschwindigkeit von der ersten Geschwindigkeit unabhängig ist.

Landwirtschaftliche Erntemaschinen eingangs genannter Art werden im Erntebetrieb über ein Feld bewegt, um mittels des Erntevorsatzes Pflanzen aufzunehmen oder abzuernten, in die Erntemaschine zu transportieren, sie dort zu verarbeiten und schließlich die verarbeiteten Pflanzen oder davon abgetrennte Teile auf ein Transportfahrzeug abzugeben. Der Erntevorsatz weist im Allgemeinen einen oder mehrere Aufnahmeförderer auf, die zum Aufnehmen der Pflanzen vom Erdboden dienen, beispielsweise Zinken einer Pick-Up, die in einem Schwad bereitgestelltes, in einem vorherigen Arbeitsgang bereits gemähtes Heu aufnehmen, oder die Pflanzen von ihren im Erdboden verbleibenden Wurzeln abtrennen und in den Erntevorsatz einziehen, wie Mäh- und Einzugstrommeln eines Maisgebisses. Ein Abgabeförderer nimmt die Pflanzen von den Aufnahmefördern an und übergibt sie einem Einzugsförderer im Einzugskanal der Erntemaschine. Als Abgabeförderer finden oft Querförderschnecken Verwendung, die die Pflanzen zusätzlich in Querrichtung zur Mitte des Erntevorsatzes fördern. Bei anderen Erntevorsätzen übernehmen die Aufnahmeförderer auch die Querförderung, die an ihren Vorderseiten (s. beispielsweise EP 0 099 527 A) oder Rückseiten in Zusammenwirken mit separaten Querförderelementen erfolgt (DE 195 31 918 A, DE 195 27 607 A). Als Abgabeförderer können bei derartigen Erntevorsätzen so genannte Schrägfördertrommeln (DE 4 111 981 A) vorgesehen sein.

Der Einzugsförderer im Einzugskanal der Erntemaschine transportiert die Pflanzen dann zu einer Erntegutbearbeitungseinrichtung der Erntemaschine, beispielsweise einer Häckseltrommel, Dreschtrommel oder einem Dresch- und Trennrotor.

Bei einem Feldhäcksler mit einer Häckseltrommel legt die Geschwindigkeit des Einzugsförderers (Vorpresswalzen) bei gegebener Drehzahl der Häckseltrommel die Schnittlänge fest. Zur Schnittlängenveränderung ist es gebräuchlich, die Drehzahl des Einzugsförderers des Feldhäckslers zu ändern, was durch Schaltgetriebe oder verstellbare rein hydraulische Antriebe (s. beispielsweise DE 196 32 977 A oder WO 02/056672 A) oder kombinierte mechanisch-hydraulische Antriebe (DE 198 12 500 A) erfolgen kann. Dabei bleibt die Drehzahl der Häckseltrommel etwa konstant, so dass die Schnittlänge umgekehrt proportional zur Drehzahl und Geschwindigkeit der Vorpresswalzen ist.

In einigen Regionen ist derzeit ein Trend zu größeren Schnittlängen zu beobachten. Die größeren Schnittlängen bedingen eine relativ hohe Geschwindigkeit der Einzugsförderer des Feldhäckslers. Um durch den Geschwindigkeitsunterschied bedingte Transportprobleme beim Übergang der Pflanzen von den Abgabeförderern der Maschine auf den Einzugsförderer des Feldhäckslers zu vermeiden, besteht die Möglichkeit, alle angetriebenen Elemente des Erntevorsatzes ebenfalls mit höherer Drehzahl anzutreiben. Dazu wurden mehrstufige Schaltgetriebe verwendet. Es wurde auch vorgeschlagen, den Erntevorsatz mit einer zur Drehzahl der Einzugsförderer proportionalen Geschwindigkeit anzutreiben (US 3 945 175 A, DE 199 18 550 A, US 6 587 771 B, US 6 666 007 B). Als nachteilig ist bei einer Variation der Geschwindigkeiten aller angetriebener Elemente des Erntevorsatzes anzusehen, dass auch die Drehzahlen der Aufnahmeförderer erhöht werden, obwohl die Erhöhung keine Verbesserung der Erntegutförderung mit sich bringt und somit prinzipiell nicht erforderlich wäre. Sie erhöht den Antriebsleistungsbedarf und bedingt beispielsweise bei einem Maisgebiss mit rotierenden Mäh- und Einzugstrommeln einen erhöhten Verschleiß der Schneidmesser und der Bremseinrichtungen des Erntevorsatzes. Durch die höheren Drehzahlen, die höhere Fliehkräfte bewirken, können auch Maiskolben von den Pflanzen getrennt werden und dem Ernteprozess verloren gehen.

Die WO 02/056672 A beschreibt eine Erntemaschine mit einem Erntevorsatz, bei dem die Abgabeförderer (d. h. Querförderschnecke bzw. Schrägfördertrommeln) mit einer Geschwindigkeit angetrieben werden, die unabhängig von der Geschwindigkeit der Aufnahmeförderer (Pick-Up-Zinken oder Mäh- und Einzugszusammenbauten) ist. Dazu werden der Einzugsförderer und der Abgabeförderer gemeinsam durch einen ersten Hydraulikmotor angetrieben, während der Aufnahmeförderer des Erntevorsatzes durch einen zweiten Hydraulikmotor angetrieben wird. Die Geschwindigkeit des Aufnahmeförderers hängt von der Vortriebsgeschwindigkeit der Erntemaschine ab.

Durch diese Anordnung wird die Geschwindigkeit des Abgabeförderers fest an die Geschwindigkeit des Einzugsförderers gekoppelt, so dass an dieser Stelle kaum noch mit Übergabeproblemen zu rechnen sein wird. Die Geschwindigkeit des Aufnahmeförderers kann frei gewählt werden und auf diese Weise an die jeweiligen Bedingungen angepasst werden. Allerdings können sich Probleme bei der Übergabe des Ernteguts vom Aufnahmeförderer an den Abgabeförderer ergeben, wenn die Unterschiede in ihren beiden Geschwindigkeiten zu groß werden. Bewegt sich der Aufnahmeförderer beispielsweise bei hohen Vortriebsgeschwindigkeiten und großen Schnittlängen wesentlich schneller als der Abgabeförderer, kann es aufnahmeseitige Verstopfungen am Abgabeförderer geben. Bewegt sich der Aufnahmeförderer bei geringen Vortriebsgeschwindigkeiten und kurzen Schnittlängen wesentlich langsamer als der Abgabeförderer, kann dieser das Erntegut auseinanderreißen, was ungleichmäßige Schnittlängen zur Folge hat.

Ein weiterer Nachteil der Anordnung nach WO 02/056672 A besteht darin, dass zwei mechanische Antriebsverbindungen zwischen dem Erntevorsatz und der Erntemaschine vorzusehen sind, die bei Anbringung und Abnahme des Erntevorsatzes jeweils anzubringen und zu demontieren sind. In der nachveröffentlichten DE 10 2004 008 340 A wird zur Überwindung dieses Problems vorgeschlagen, ein Getriebe mit änderbarer Übersetzung zwischen dem Aufnahmeförderer und dem Abgabeförderer vorzusehen. Hier ist keine selbsttätige Anpassung an eine Änderung der Geschwindigkeit des Einzugsförderers vorgesehen; sie ist durch Änderung der Übersetzung des Getriebes durch den Bediener vorzunehmen.

Das der Erfindung zu Grunde liegende Problem wird darin gesehen, eine gegenüber dem erwähnten Stand der Technik verbesserte Kombination aus einer Erntemaschine und einem Erntevorsatz bereitzustellen, bei der eine Anpassung der Geschwindigkeit des Abgabeförderers an die Geschwindigkeit des Aufnahmeelements des Erntevorsatzes möglich ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die erste Geschwindigkeit, mit der der Aufnahmeförderer das Erntegut aufnimmt, und die dritte Geschwindigkeit, mit der der Einzugsförderer das Erntegut fördert, sind voneinander unabhängig. Die dritte Geschwindigkeit kann entsprechend einer gewünschten Schnittlänge gewählt werden, während die erste Geschwindigkeit frei wählbar den jeweiligen Gegebenheiten angepasst werden kann. Es wird vorgeschlagen, die zweite Geschwindigkeit, mit der der Abgabeförderer des Erntevorsatzes das Erntegut fördert, selbsttätig in Abhängigkeit von der ersten Geschwindigkeit und der dritten Geschwindigkeit zu steuern. Die zweite Geschwindigkeit liegt zwischen der ersten und der dritten Geschwindigkeit, vorzugsweise in der Mitte dazwischen.

Auf diese Weise sind beim Abgabeförderer weder annahmeseitig noch abgabeseitig Übergabeprobleme zu erwarten.

Die erste Geschwindigkeit kann von einer Betriebsbedingung der Erntemaschine abhängen, wie ihrer Vortriebsgeschwindigkeit oder der Durchsatzkapazität oder des jeweiligen Durchsatzes des Erntevorsatzes oder des Einzugsförderers oder der Erntegutbearbeitungseinrichtung der Erntemaschine. Die erste Geschwindigkeit variiert vorzugsweise innerhalb bestimmter Grenzen abhängig von der Vortriebsgeschwindigkeit. Bei einem Erntevorsatz in Form einer Pick-Up, die als Aufnahmeförderer eine drehbare Aufnahmewalze mit Zinken zum Aufsammeln geschnittenen Grases, Heu oder Strohs vom Feld und als Abgabeförderer eine Querförderschnecke aufweist, sollte immer eine minimale Geschwindigkeit der Pick-Up-Walze aufrechterhalten werden, sogar im Stillstand, um es der Walze zu ermöglichen, nach einem Reversiervorgang Erntegut aufzunehmen, das vor dem Erntevorsatz abgelegt wurde. Dieser Vorgang kann erforderlich sein, um den Erntevorsatz nach dem Nachweis eines Fremdobjekts, z. B. aus Eisen, oder nach einer Verstopfung des Einzugsförderers wieder frei zu räumen. Es kann für den Bediener vorteilhaft sein, die Geschwindigkeit des Aufnahmeförderers unabhängig von der jeweiligen Vortriebsgeschwindigkeit der Erntemaschine zu wählen, z. B. bei der Aufnahme kurzen Grases. Dann kann die Vortriebsgeschwindigkeit relativ hoch gewählt werden, um einen hohen Durchsatz zu erzielen, während die Geschwindigkeit des Aufnahmeförderers relativ gering ist, um eine bessere Rechenwirkung auf das Erntegut auf dem Feld zu erzielen. Bei reihenunabhängig arbeitenden Maisgebissen mit um die Hochachse rotierenden Mäh- und Einzugszusammenbauten ist eine von der Vortriebsgeschwindigkeit unabhängige oder nur schwach mit ihr ansteigende Drehzahl der als Aufnahmeförderer dienenden Mäh- und Einzugszusammenbauten angebracht.

Es kommen beliebige Erntevorsätze zur Verwendung in der erfindungsgemäßen Kombination in Frage. So können, wie bereits erwähnt, Maiserntegeräte mit Aufnahmeförderern in Form von Mäh- und Einzugstrommeln, die aus einer um eine etwa vertikale Achse rotierenden Schneidscheibe und einer darüber angeordneten, koaxialen Fördertrommel mit um den Umfang verteilten Aussparungen zur Aufnahme von Maisstängeln aufgebaut sind, und bei denen der Abgabeförderer eine Querförderschnecke oder eine Schrägfördertrommel ist, die um eine etwa vertikale Achse rotiert, verwendet werden. Es können auch Pick-Ups mit Zinkenförderern als Aufnahmeförderer und Querförderschnecken als Abgabeförderer, Schneidwerke mit Haspeln als Aufnahmeförderer und Querförderschnecken oder Fördergurten als Querförderer, oder Maispflücker mit Pflückaggregaten als Aufnahmeförderer und Querförderschnecken als Abgabeförderer verwendet werden.

Die Erntemaschine kann ein Feldhäcksler mit einer Häckseltrommel als Erntegutbearbeitungseinrichtung sein, bei dem die Geschwindigkeit des Einzugsförderers die Schnittlänge definiert. Die Erfindung kann auch an einem Mähdrescher mit einer Dreschtrommel oder einem Dresch- und Trennrotor als Erntegutbearbeitungseinrichtung verwendet werden.

Zum Antrieb des Aufnahmeförderers und/oder des Abgabeförderers des Erntevorsatzes kann ein rein hydraulischer Antrieb des Erntevorsatzes vorgesehen sein. Die Hydromotoren können sich an der Erntemaschine befinden und über lösbare mechanische Antriebsverbindungen den Aufnahmeförderer und den Abgabeförderer antreiben, oder direkt am Erntevorsatz befestigt werden, so dass letzterer nur mit hydraulischen, aber nicht mit mechanischen Antriebsverbindungen auszustatten wäre. Es wäre auch eine Mischform möglich, mit einem Hydromotor am Erntevorsatz und einem an der Erntemaschine. Der Aufnahmeförderer und der Abgabeförderer würden dann ausschließlich durch Hydraulikmotore angetrieben, die elastisch arbeiten und eine unproblematische Verstellung der Drehzahlen erlauben, jedoch einen begrenzten Wirkungsgrad haben. Alternativ wäre auch ein mechanischer Antrieb des Aufnahmeförderers und/oder des Abgabeförderers denkbar, bei dem die veränderlichen Drehzahlen durch Riemenvariatoren bereitgestellt werden.

Vorzugsweise findet jedoch ein Antrieb des Aufnahmeförderers und des Abgabeförderers durch jeweils ein Planetengetriebe Verwendung. Ein Element (Sonnenrad, Planetenradträger oder Ringrad) des Planetengetriebes wird zur Drehzahländerung über einen fremdkraftbetriebenen Motor (d. h. elektrisch oder hydraulisch) angetrieben, während ein Element mechanisch angetrieben wird und eines als Abtrieb dient. Dieser Motor kann auch zum Reversieren dienen.

Vorzugsweise ist das Planetengetriebe für den Förderer, der die höhere Antriebsleistung erfordert (in der Regel der Aufnahmeförderer) an der Erntemaschine angeordnet und ausgangsseitig über einen rein mechanischen Antriebsstrang mit dem zugeordneten (Aufnahme-) Förderer verbunden. Das Planetengetriebe des jeweils anderen Förderers kann dann auch an der Erntemaschine angebracht werden, und über einen zweiten, rein mechanischen Antriebsstrang mit dem zugehörigen Förderer, in der Regel dem Abgabeförderer, verbunden werden, was die Anbringung und Demontage zweier Antriebe erfordert. Alternativ ist das Planetengetriebe des jeweils anderen Förderers am Erntevorsatz angeordnet. Seine mechanische Eingangsleistung wird dann zweckmäßigerweise vom mechanischen Antriebsstrang des Aufnahmeförderers abgenommen. Dabei kann eine von der dritten Geschwindigkeit abhängige Drehzahl mechanisch vom Einzugsförderer bereitgestellt werden.

In den Zeichnungen sind drei nachfolgend näher beschriebene Ausführungsbeispiele der Erfindung dargestellt. Es zeigt:
- Fig. 1: eine Erntemaschine mit einem Erntevorsatz in Form einer Pick-Up in Seitenansicht und in schematischer Darstellung,
- Fig. 2: ein Schema des Antriebssystems der Erntemaschine und des Erntevorsatzes,
- Fig. 3: ein Schema des Schnittlängengetriebes zum Antrieb des Einzugsförderers der Erntemaschine,
- Fig. 4: ein Schema des Aufnahmeförderergetriebes,
- Fig. 5: ein Schema des Abgabeförderergetriebes,
- Fig. 6: ein Schema einer zweiten Ausführungsform eines Antriebssystems der Erntemaschine und des Erntevorsatzes aus Figur 1,
- Fig. 7: eine schematische Draufsicht auf das Einzugsgehäuse der Erntemaschine mit einem Erntevorsatz in Form eines Maisgebisses, und
- Fig. 8: ein Schema des Antriebssystems der Erntemaschine und des Erntevorsatzes aus Figur 7.

### Aufbau der Erntemaschine und des Erntevorsatzes

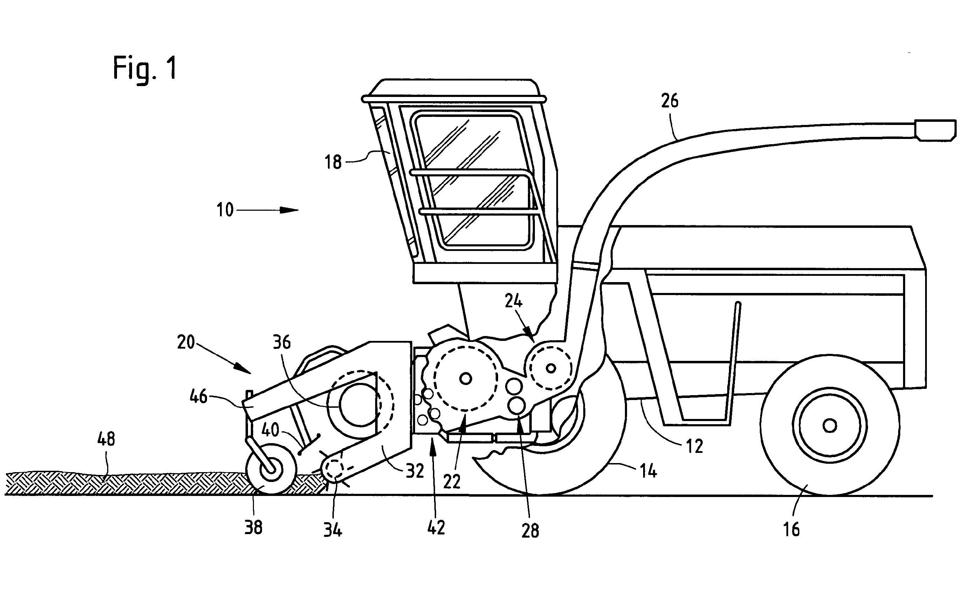

In der Figur 1 ist eine Erntemaschine 10 in der Art eines selbstfahrenden Feldhäckslers dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 einsehbar ist. Mittels des Erntevorsatzes 20 vom Boden aufgenommenes Gut, z. B. Gras oder dergleichen wird über einen Einzugsförderer 42 mit Zuführwalzen, die innerhalb eines Einzugsgehäuses an der Frontseite des Feldhäckslers 10 angeordnet sind, einer Erntegutbearbeitungseinrichtung 22 in Form einer Häckseltrommel zugeführt, die es in kleine Stücke häckselt und es einer Fördervorrichtung 24 aufgibt. Das Gut verlässt die Erntemaschine 10 zu einem nebenher fahrenden Anhänger über einen um eine etwa vertikale Achse drehbaren und in der Neigung verstellbaren Austragschacht 26. Zwischen der Erntegutbearbeitungseinrichtung 22 und der Fördervorrichtung 24 erstreckt sich eine Nachzerkleinerungsvorrichtung 28, durch die das zu fördernde Gut der Fördervorrichtung 24 tangential zugeführt wird.

Der Erntevorsatz 20 ist in diesem Ausführungsbeispiel als so genannte Pick-Up ausgebildet. Der Erntevorsatz 20 baut sich auf einem Gestell 32 auf und stützt sich über beidseitig angebrachte Stützräder 38, die über je einen Träger 46 am Gestell 32 befestigt sind, auf dem Erdboden ab. Die Aufgabe des Erntevorsatzes 20 besteht darin, auf dem Boden eines Felds in einem Schwad 48 abgelegtes Erntegut aufzunehmen und es der Erntemaschine 10 zur weiteren Bearbeitung zuzuführen. Hierzu wird der Erntevorsatz 20 während des Erntebetriebes mit geringem Abstand zum Erdboden über das Feld bewegt, während er zum Transport auf einer Strasse oder auf Wegen angehoben wird. Zum Erntevorsatz 20 gehört ein Abgabeförderer 36 in Form einer Förderschnecke, die das aufgenommene Gut von den Seiten des Erntevorsatzes 20 zu einer in der Mitte gelegenen, nicht gezeigten Abgabeöffnung fördert, hinter der der Einzugsförderer 42 folgt. Der Erntevorsatz 20 weist auch einen, wie auch der Abgabeförderer 36, rotativ angetriebenen Aufnahmeförderer 34 auf, der unterhalb des Abgabeförderers 36 angeordnet ist und mit seinen Förderzinken das Gut vom Erdboden anhebt, um es dem Abgabeförderer 36 zu übergeben. Außerdem ist ein Niederhalter 40 in Form eines über dem Aufnahmeförderer 34 angeordneten Bleches am Gestell 32 befestigt.

### Antriebsstrang

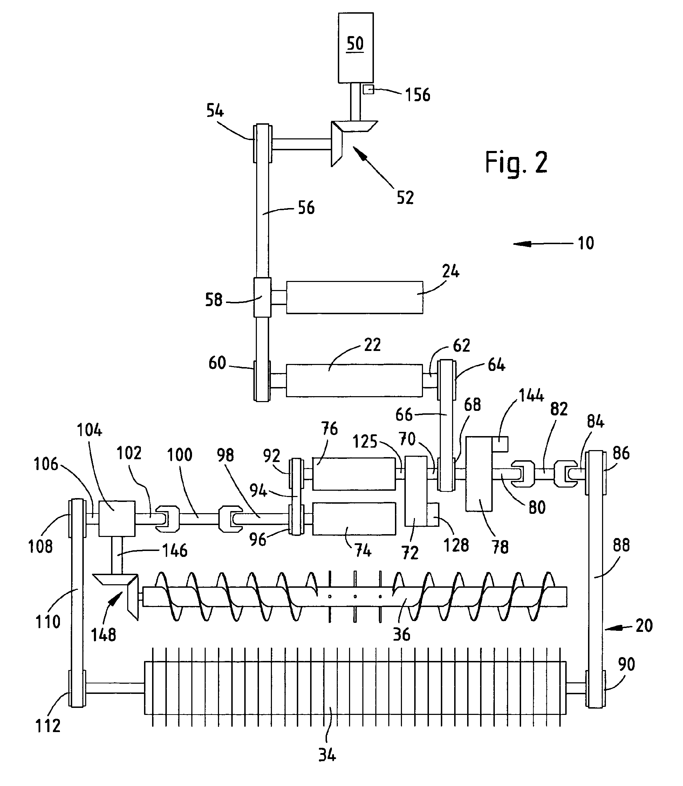

In der Figur 2 ist der Antriebsstrang der Erntemaschine 10 und des Erntevorsatzes 20 dargestellt. Ein am Rahmen 12 der Erntemaschine 10 befestigter Verbrennungsmotor 50 treibt über ein Kegelradgetriebe 52 und eine Riemenscheibe 54 einen Riemen 56 an, der mit einer Riemenscheibe 58, welche die Fördervorrichtung 24 antreibt, und mit einer Riemenscheibe 60 zusammenwirkt, die die Erntegutbearbeitungseinrichtung 22 antreibt. Die Erntegutbearbeitungseinrichtung 22 treibt wiederum eine Welle 62 an, die ein Ritzel 64 antreibt. Das Ritzel 64 steht über eine Kette 66 in Antriebsverbindung mit einem Ritzel 68, das die Eingangswelle 70 eines Schnittlängengetriebes 72 antreibt. Alternativ ist eine Antriebsverbindung mit Zahnrädern zwischen der Erntegutbearbeitungseinrichtung 22 und dem Schnittlängengetriebe 72 vorgesehen.

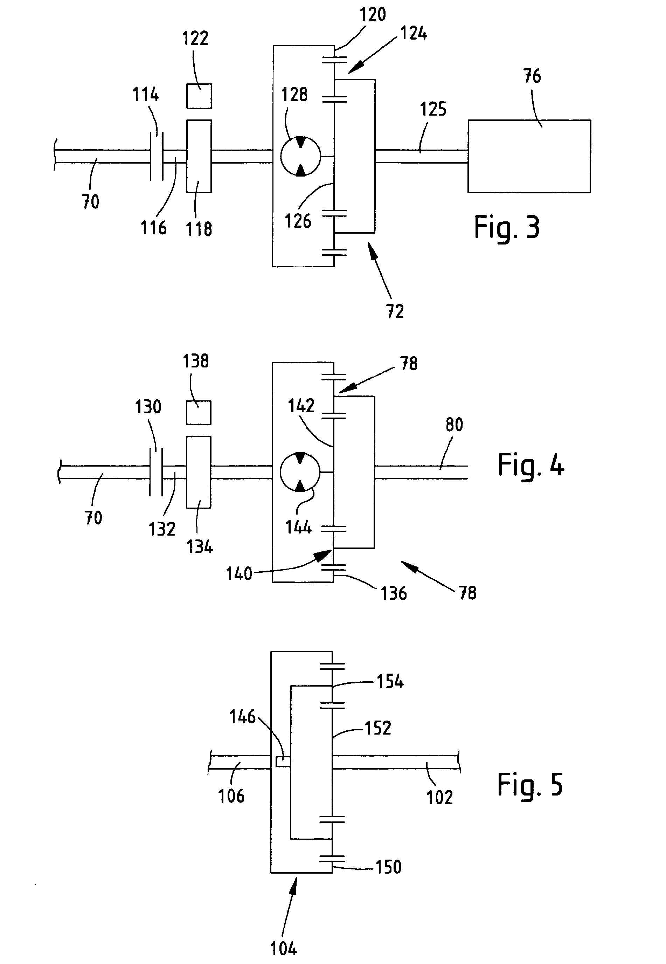

Das Schnittlängengetriebe 72 enthält Antriebselemente zum Antrieb unterer Vorpresswalzen 74, 76 und oberer Vorpresswalzen (nicht in Figur 2 dargestellt, s. aber Figur 1) des Einzugsförderers 42. Die Drehzahl der Vorpresswalzen 74, 76 kann durch das Schnittlängengetriebe 72 in Stufen oder stufenlos verändert werden. Es ist in der Figur 3 detaillierter dargestellt.

Die Welle 70 treibt auch ein Aufnahmeförderergetriebe 78 an. Das Aufnahmeförderergetriebe 78 ist ausgangsseitig mit einem Wellenstummel 80 verbunden, an dem eine erste Gelenkwelle 82 mit fester oder variabler Länge lösbar befestigt ist. Die Gelenkwelle 82 erstreckt sich vom Wellenstummel 80 des Aufnahmeförderergetriebes 78 zu einem Wellenstummel 84 am Erntevorsatz 20. Der Wellenstummel 84 treibt ein Ritzel 86 an, das über einer Kette 88 mit einem Ritzel 90 in Antriebsverbindung steht. Das Ritzel 90 treibt den Aufnahmeförderer 34 an.

Die oberen Vorpresswalzen 74, 76 stehen durch drei Zahnräder 92, 94, 96 untereinander in Antriebsverbindung. Die Welle der vorderen, unteren Vorpresswalze 74 ist mit einem Wellenstummel 98 verbunden, an dem eine zweite Gelenkwelle 100 mit fester oder variabler Länge lösbar befestigt ist. Die Gelenkwelle 100 erstreckt sich vom Wellenstummel 98 zu einem Wellenstummel 102 am Erntevorsatz 20. Der Wellenstummel 102 erstreckt sich in ein Abgabeförderergetriebe 104, dessen zweite Eingangswelle 106 über ein Ritzel 108 und eine Kette 110 mit einem Ritzel 112 in Antriebsverbindung steht, die vom Aufnahmeförderer 34 angetrieben wird. Eine Ausgangswelle 146 des Abgabeförderergetriebes 104 treibt über ein Kegelradgetriebe 148 den Abgabeförderer 36 an.

Die Figur 3 zeigt das Schnittlängengetriebe 72 detaillierter. Die Welle 70 ist mit einer Kupplung 114 gekoppelt, die abtriebsseitig eine Welle 116 antreibt, welche ein Ritzel 118 trägt und das Ringrad 120 eines Planetengetriebes antreibt. Eine Klinke 122 kann mit dem Ritzel 118 in Eingriff gebracht werden, um die Welle 116 zu arretieren. Die Kombination aus Ritzel 118 und Klinke 122 könnte auch durch eine Reibungsbremse ersetzt werden. Ein Planetenradträger 124 des Planetengetriebes treibt die Welle 125 zum Antrieb der Vorpresswalze 76 an, während ein Sonnenrad 126 des Planetengetriebes durch einen Hydraulikmotor 128 antreibbar ist.

Der Aufbau des in der Figur 4 dargestellten Aufnahmeförderergetriebes 78 ist gleichartig mit dem Schnittlängengetriebe 72. Die Welle 70 ist mit einer Kupplung 130 gekoppelt, die abtriebsseitig eine Welle 132 antreibt, welche ein Ritzel 134 trägt und das Ringrad 136 eines zweiten Planetengetriebes antreibt. Eine Klinke 138 kann mit dem Ritzel 134 in Eingriff gebracht werden, um die Welle 132 zu arretieren. Die Kombination aus Ritzel 134 und Klinke 138 könnte auch durch eine Reibungsbremse ersetzt werden. Ein Planetenradträger 140 des zweiten Planetengetriebes treibt die Welle 80 an, während ein Sonnenrad 142 des Planetengetriebes durch einen Hydraulikmotor 144 antreibbar ist.

Die Figur 5 zeigt das Abgabeförderergetriebe 104 detaillierter. Die Welle 106 steht mit dem Ringrad 150 eines dritten Planetengetriebes in Verbindung, während die Welle 102 das Sonnenrad 152 antreibt und der Planetenradträger 154 die Welle 146 antreibt.

Die Hydraulikmotore 128, 144 weisen jeweils verstellbare Taumelplatten auf und sind durch eine Pumpe 156 beaufschlagbar, die durch den Verbrennungsmotor 50 angetrieben wird. Die Stellungen der Taumelplatten der Hydraulikmotore 128, 144 und damit ihre Drehzahlen sind durch den Bediener in de Fahrerkabine 18 variierbar oder werden selbsttätig durch eine elektronische Steuerung vorgegeben.

### Erntebetrieb

Im normalen Erntebetrieb sind die Kupplungen 114 und 130 geschlossen und die Klinken 122 und 138 sind außer Eingriff mit den Zahnrädern 118 und 134. Der mit etwa konstanter Drehzahl, die durch den Bediener in der Fahrerkabine 18 variierbar ist, angetriebene Verbrennungsmotor 50 treibt somit das Ringrad 120 des ersten Planetengetriebes im Schnittlängengetriebe 72 an. Durch Änderung der Drehzahl des Hydraulikmotors 128 kann die Drehzahl der Welle 125 und somit die Geschwindigkeit der Vorpresswalzen 74, 76 des Einzugsförderers 42 variiert werden. Da die Geschwindigkeit der Erntegutbearbeitungseinrichtung 22 konstant bleibt, ist die Schnittlänge durch Ändern der Drehzahl des Hydraulikmotors 128 einstellbar. Dabei wird der größte Teil der Leistung mechanisch übertragen, während der Hydraulikmotor 128 nur zur Feineinstellung der Schnittlänge dient. Die Schnittlänge (d. h. die Drehzahl des Hydraulikmotors 128) kann durch den Bediener in der Fahrerkabine 18 über eine Eingabeeinrichtung vorgegeben werden. Es ist auch eine selbsttätige Einstellung der Schnittlänge denkbar, die beispielsweise auf einer Messung der Feuchtigkeit oder anderer mit einem Sensor erfasster Eigenschaften des Ernteguts basiert.

Der Verbrennungsmotor 50 treibt dann auch das Ringrad 136 des zweiten Planetengetriebes im Aufnahmeförderergetriebe 78 an. Die Geschwindigkeit des Aufnahmeförderers 34 ist durch die Drehzahl des Hydraulikmotors 144 veränderbar. Dabei wird der größte Teil der Leistung mechanisch übertragen, während der Hydraulikmotor 144 nur zur Feineinstellung der Geschwindigkeit des Aufnahmeförderers 34 dient. Die Geschwindigkeit des Aufnahmeförderers 34 (d. h. die Drehzahl des Hydraulikmotors 144) kann durch den Bediener in der Fahrerkabine 18 über eine Eingabeeinrichtung vorgegeben werden. Es ist auch eine selbsttätige Einstellung seiner Geschwindigkeit denkbar, die beispielsweise auf der Art des jeweils verwendeten Erntevorsatzes 20 und der jeweiligen Vortriebsgeschwindigkeit beruht. Bei der dargestellten Pick-Up hat der Aufnahmeförderer 34 beispielsweise schon im Stillstand eine gewisse Geschwindigkeit, die linear mit der Vortriebsgeschwindigkeit ansteigt.

Der Abgabeförderer 36 wird durch das Aufnahmeförderergetriebe 104 mit einer Geschwindigkeit angetrieben, die von der Geschwindigkeit des Einzugsförderers 42 und der Geschwindigkeit des Aufnahmeförderers 34 abhängt. Das Sonnenrad 152 des dritten Planetengetriebes dreht sich im normalen Erntebetrieb gegensinnig zum Ringrad 150. Die Geschwindigkeit des Planetenradträgers 154 und somit der Welle 146 zum Antrieb des Abgabeförderers 36 steigt daher jeweils bei Erhöhung der Drehzahl des Einzugsförderers 42 und bei Erhöhung der Drehzahl des Aufnahmeförderers 34 an. Das Abgabeförderergetriebe 104 und die übrigen Elemente im Antriebsstrang des Abgabeförderers 36 sind derart dimensioniert, dass die Geschwindigkeit des Abgabeförderers 36, d. h. die Geschwindigkeit, mit der er das Erntegut an den Einzugsförderer 42 abgibt, zwischen den Geschwindigkeiten liegt, mit denen der Einzugsförderer 42 und der Aufnahmeförderer 34 das Erntegutfördern. Die Geschwindigkeit des Abgabeförderers 36 liegt vorzugsweise zumindest näherungsweise in der Mitte zwischen diesen Geschwindigkeiten. Dadurch vermeidet man beim Abgabeförderer 36 annahme- und abgabeseitige Förderprobleme.

### Reversieren

Falls nach einem Gutstau oder bei Ansprechen eines Metalldetektors im Einzugskanal der Erntemaschine ein Reversieren erforderlich wird, wird zunächst der Verbrennungsmotor 50 vom Schnittlängengetriebe 72 und vom Aufnahmeförderergetriebe 78 antriebsmäßig getrennt, was (im Falle des Nachweises eingedrungenen Fremdmaterials ausgelöst durch den Metalldetektor oder im Falle eines Gutstaus durch den Bediener oder einen geeigneten Sensor) durch die fremdkraftbetätigten Kupplungen 114 und 130 erfolgen kann. Der Metalldetektor würde kurz danach auch die Welle 125 arretieren. Vorzugsweise wird zusätzlich eine Elektrokupplung in der Riemenscheibe 54 ausgeschaltet, um auch die Erntegutbearbeitungseinrichtung 22 und die Fördervorrichtung 24 zum Stillstand zu bringen.

Zum Reversieren werden dann die Klinken 122 und 138 mit den Ritzeln 118 bzw. 134 in Eingriff gebracht. Die Hydraulikmotore 128 und 144 werden in gegenüber dem Erntebetrieb umgekehrter Richtung in Drehung gebracht und reversieren dann den Einzugsförderer 42 und den Aufnahmeförderer 34. Über das Abgabeförderergetriebe 104 wird auch der Abgabeförderer 104 reversiert. Die Hydraulikmotore 128 und 144 können nach der Beseitigung des Gutstaus bzw. des Fremdmaterials auch zum langsamen Einziehen des Ernteguts dienen. Da zwei Hydraulikmotore 128, 144 vorhanden sind, besteht auch die Möglichkeit, zunächst den Aufnahmeförderer 34 durch Reversieren des Hydraulikmotors 144 zu reversieren. Dabei dreht sich auch der Abgabeförderer 36, jedoch noch relativ langsam und das Erntegut wird durch den Abgabeförderer 36 und den Aufnahmeförderer 34 ausgeworfen. Anschließend wird dann der Einzugsförderer 42 durch Reversieren des Hydraulikmotors 128 reversiert, woraufhin der Abgabeförderer 36 sich schneller dreht. Da der Abgabeförderer 36 und der Aufnahmeförderer 34 schon vom Erntegut befreit sind, kann nunmehr auch der Einzugsförderer 42 unproblematisch vom Erntegutstau befreit werden.

### Zweite Ausführungsform

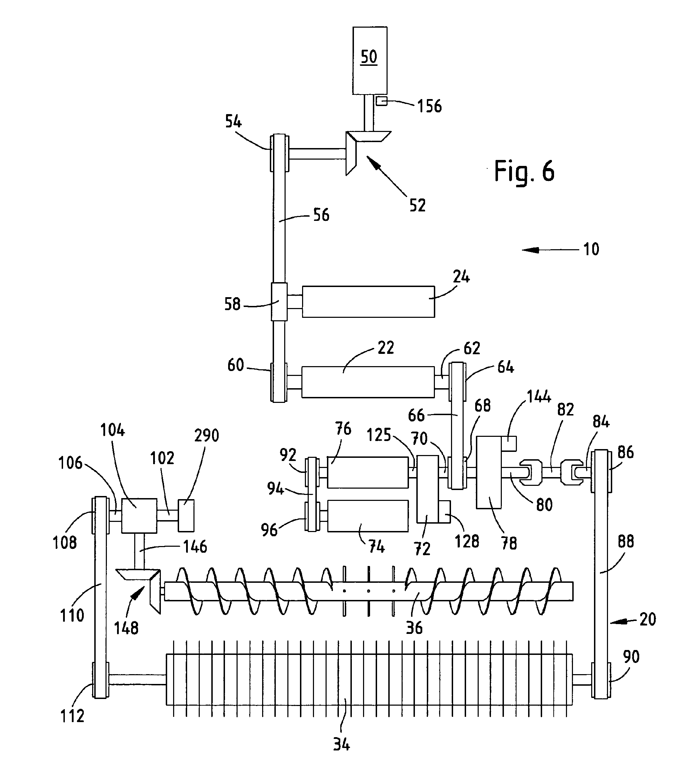

Die Figur 6 zeigt ein Schema des Antriebsstrangs einer zweiten Ausführungsform der Erfindung. Mit der ersten Ausführungsform übereinstimmende Elemente sind mit denselben Bezugszeichen gekennzeichnet. Die meisten Elemente sind identisch mit der ersten Ausführungsform, so dass im Folgenden nur die Abweichungen erläutert werden.

Im Unterschied zum in Figur 2 gezeigten Antriebsstrang wird die Welle 102 zum Antrieb des Sonnenrades 152 des dritten Planetengetriebes im Abgabeförderergetriebe 104 durch einen separaten Hydraulikmotor 290 angetrieben. Dadurch erreicht man, dass die zweite Geschwindigkeit, mit der der Abgabeförderer 36 das Erntegut fördert, mit größeren Freiheitsgraden eingestellt oder geregelt werden kann. Der Zusammenhang zwischen der dritten Geschwindigkeit des Einzugsförderers 42 und der zweiten Geschwindigkeit ist nicht mehr mechanisch vorgegeben, sondern kann durch eine geeignete Steuerung beliebig definiert werden. Der Hydraulikmotor 290 dient auch zum Reversieren des Abgabeförderers 36 und nach der Beseitigung eines Gutstaus oder nachgewiesenen Fremdkörpers zum langsamen Einziehen des Ernteguts.

### Dritte Ausführungsform

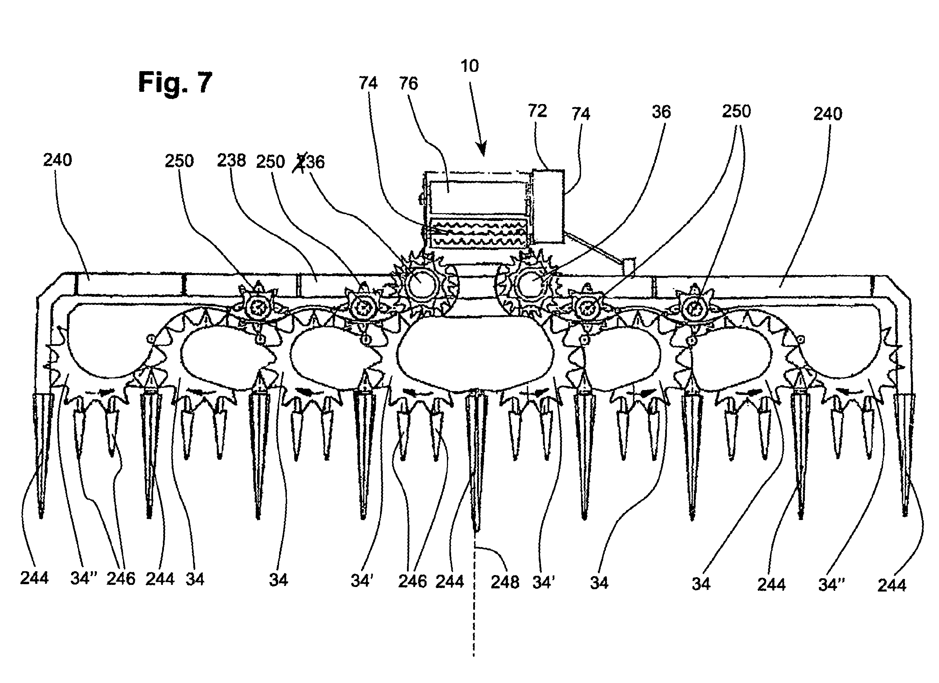

Die Figur 7 zeigt eine Draufsicht auf das Einzugsgehäuse der Erntemaschine 10, in dem die Vorpresswalzen 74, 76 angeordnet sind, mit einem daran angebrachten Erntevorsatz 20' in Form eines Maisgebisses. Der Erntevorsatz 20' weist einen Querträger auf, der sich aus einem mittleren, mit dem Einzugskanal des Feldhäckslers 10 verbundenem Segment 238 und zwei zum Transport auf einer Straße durch Hydraulikzylinder um eine parallel zur Vorwärtsrichtung V verlaufende Achse nach oben schwenkbaren, äußeren Segmenten 240 zusammensetzt. Am Querträger sind acht Aufnahmeförderer 34 in Form von Mäh- und Einzugszusammenbauten seitlich nebeneinander abgestützt. Es kann auch eine beliebige andere Anzahl an Aufnahmeförderern 34 verwendet werden. Die Aufnahmeförderer 34 weisen untere Schneidscheiben und darüber angeordnete Förderscheiben mit um ihren Umfang verteilten Aussparungen zur Aufnahme von Pflanzenstängeln auf. Ihnen sind größere Stängelteiler 244 und dazwischen angeordnete kleinere Stängelteiler 246 vorgelagert.

An der Rückseite der Zwickelbereiche zwischen den benachbarten Aufnahmeförderern 34 (mit Ausnahme des Bereichs zwischen den beiden der Längsmittelebene 248 benachbarten Aufnahmeförderern 34' und des Bereichs zwischen äußeren und den diesen jeweils benachbarten Aufnahmeförderern 34") befinden sich Querfördertrommeln 250. Die äußeren Aufnahmeförderer 34" drehen sich jeweils gegensinnig gegenüber den drei nach innen folgenden Aufnahmeförderern 34, so dass sich stromab der äußeren Aufnahmeförderer 34" Querfördertrommeln 250 erübrigen. An den Rückseiten der der Längsmittelebene 248 benachbarten Aufnahmeförderer 34' befinden sich Abgabeförderer 36 in Form so genannter Schrägfördertrommeln mit etwa vertikalen, jedoch leicht nach vorn geneigten Drehachsen, die dazu dienen, den Höhenunterschied zwischen dem Boden des Erntevorsatzes 20' und dem Einzugsgehäuse der Erntemaschine 10 zu überwinden.

Beim Erntevorgang drehen sich die Aufnahmeförderer 34 in den durch die Pfeile angedeuteten Richtungen. Sie trennen das Erntegut durch ihre Schneidscheiben vom Erdboden ab und nehmen es in den Aussparungen ihrer Förderscheiben auf. Es wird dann an ihren Rückseiten durch die Querfördertrommeln 250 im Zusammenwirken mit den Rückseiten der Aufnahmeförderer 34 in Richtung auf die Längsmittelebene 248 des Erntevorsatzes 20' transportiert. Dann wird es durch die Abgabeförderer 36 übernommen, die es zunächst in Richtung auf die Längsmittelebene 48 zu und dann nach hinten und oben in das Einzugsgehäuse der Erntemaschine 10 fördern.

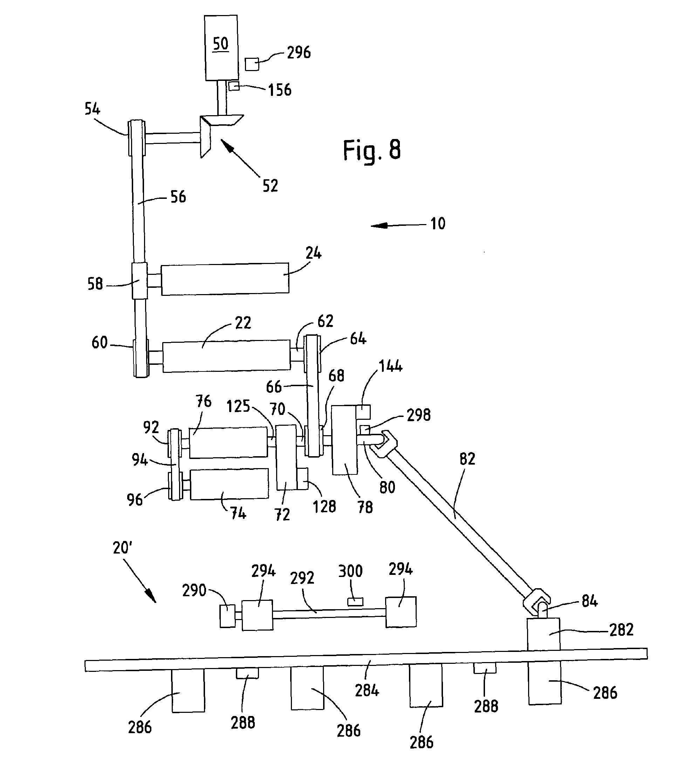

In der Figur 8 ist der Antriebsstrang der Erntemaschine 10 und des Erntevorsatzes 20' dargestellt. Mit der ersten Ausführungsform übereinstimmende Elemente sind mit den selben Bezugszeichen gekennzeichnet. Der Antrieb des Einzugsförderers 42 mit den Vorpresswalzen 74, 76 über das Schnittlängengetriebe 72 und der Gelenkwelle 82 über das Aufnahmeförderergetriebe 78 stimmt mit der ersten Ausführungsform überein. Im Folgenden werden daher nur Unterschiede zur ersten Ausführungsform erläutert.

Die Gelenkwelle 82 erstreckt sich vom Wellenstummel 80 des Aufnahmeförderers 78 zum Wellenstummel 84 eines Eingangsgetriebes 282 des Erntevorsatzes 20'. Das Eingangsgetriebe 282 steht durch Zahnräder und/oder Ketten (nicht eingezeichnet) mit einer Querwelle 284 in Antriebsverbindung, die sich innerhalb der Segmente 238, 240 des Querträgers befindet und sich im Wesentlichen über die gesamte Breite des Erntevorsatzes 20' erstreckt. Im Übergangsbereich zu den hochklappbaren Segmenten 240 sind in der Querwelle 284 geeignete Kupplungen (nicht eingezeichnet) vorgesehen. Die Querwelle 284 treibt über Kegelzahnräder (nicht eingezeichnet) oder dgl. acht Getriebe 286 an, die jeweils einem Aufnahmeförderer 34 zugeordnet sind. Die Querwelle 284 steht über vier weitere, kleinere Getriebe 288 mit den Querfördertrommeln 250 in Antriebsverbindung.

Weiterhin ist der Erntevorsatz 20' mit einem dritten Hydraulikmotor 290 versehen, der eine Welle 292 antreibt und durch lösbare Hydraulikschläuche mit der Pumpe 156 verbunden ist. Die Welle 292 treibt zwei Getriebe 294 an, die ihrerseits die Abgabeförderer 36 antreiben.

### Arbeitsweise der dritten Ausführungsform

Das Schnittlängengetriebe 72 ermöglicht eine Veränderung der Fördergeschwindigkeit des Einzugsförderers 42 in einem gewissen Schnittlängenbereich. Die Drehzahl der Aufnahmeförderer 34 und der Querfördertrommeln 250, die über das Aufnahmeförderergetriebe 78 angetrieben werden, ist von der Geschwindigkeit des Einzugsförderers unabhängig. Die Drehzahl des Hydraulikmotors 144 ist derart gewählt, dass ein sicheres Abschneiden des zu erntenden stängelartigen Ernteguts, insbesondere Mais, und ein störungsfreier Transport des Ernteguts zu den Abgabeförderern 36 erfolgt. Sie ist bei stillstehender Erntemaschine 10 bereits hinreichend hoch, um die Pflanzen sicher abzuschneiden und wird durch eine Steuerung 296 linear mit der Vortriebsgeschwindigkeit der Erntemaschine 10 geringfügig gesteigert. Die Steuerung 296 hält die Geschwindigkeit der Welle 284 konstant, auch wenn der Verbrennungsmotor 50 bei höherer Belastung langsamer rotiert. Die Steuerung 296 ist vorzugsweise mit einem Sensor 298 zur Erfassung der Drehzahl des Wellenstummels 80 oder eines damit antriebsmäßig verbundenen Elements versehen, um die Drehzahl des Hydraulikmotors 144 nicht nur einstellen, sondern auch regeln zu können. Der Zusammenhang zwischen der ersten und dritten Geschwindigkeit als Eingangsgrößen und der zweiten Geschwindigkeit als Ausgangsgröße ist in der Steuerung in Form von Tabellen oder Funktionszusammenhängen abgespeichert.

Die Steuerung 296 regelt auch die Drehzahl des Hydraulikmotors 290, basierend auf der Drehzahl des Einzugsförderers 42 und der Aufnahmeförderer 34. Sie wird derart gewählt, dass die Fördergeschwindigkeit der Abgabeförderer 36 etwa in der Mitte zwischen der Fördergeschwindigkeit des Einzugsförderers 42 und des Aufnahmeförderers 34 liegt. Die Steuerung ist vorzugsweise mit einem Sensor 300 zur Erfassung der Drehzahl der Welle 292 oder eines damit antriebsmäßig verbundenen Elements versehen, um die Drehzahl des Hydraulikmotors 290 nicht nur einstellen, sondern auch regeln zu können. Die Steuerung 296 kann auch die Drehzahl des Einzugsförderers 42 vorgeben oder regeln, insbesondere in Abhängigkeit von der Vortriebsgeschwindigkeit und der Art und Breite des Erntevorsatzes 20, 20'.

Beim Reversieren werden die Hydraulikmotoren 128, 144 und 290 in gegenüber dem Erntebetrieb umgekehrter Richtung angetrieben. Die zeitliche Reihenfolge kann derart gewählt werden, dass zuerst die Aufnahmeförderer 34 durch den Hydraulikmotor 144 reversiert werden, danach die Abgabeförderer 36 durch den Hydraulikmotor 290 und erst danach der Einzugsförderer 42 durch den Hydraulikmotor 128. Die zuvor in Bewegung gesetzten Förderer bleiben jeweils eingeschaltet, zumindest bis der Gutstau oder Fremdkörper entfernt ist.

## Patentansprüche

1. Kombination aus einer landwirtschaftlichen Erntemaschine (10) und einem Erntevorsatz (20, 20'), mit:
einem Aufnahmeförderer (34) des Erntevorsatzes (20, 20'), der antreibbar ist, um Erntegut mit einer ersten, veränderbaren Geschwindigkeit aufzunehmen,
einem Abgabeförderer (36) des Erntevorsatzes (20, 20'), der antreibbar ist, um von dem Aufnahmeförderer (34) aufgenommenes Erntegut mit einer zweiten, veränderbaren Geschwindigkeit anzunehmen, zu fördern und abzugeben, und
einem in einem Einzugskanal der Erntemaschine (10) angeordneten Einzugsförderer (42), der antreibbar ist, um Erntegut von dem Abgabeförderer (36) mit einer dritten, veränderbaren Geschwindigkeit anzunehmen, zu fördern und an eine Erntegutbearbeitungseinrichtung (22) abzugeben, wobei die dritte Geschwindigkeit von der ersten Geschwindigkeit unabhängig ist,
**dadurch gekennzeichnet, dass** die zweite Geschwindigkeit von der ersten und dritten Geschwindigkeit abhängt und zwischen der ersten und dritten Geschwindigkeit liegt.

2. Kombination nach Anspruch 1, **dadurch gekennzeichnet, dass** die zweite Geschwindigkeit etwa in der Mitte zwischen der ersten und dritten Geschwindigkeit liegt.

3. Kombination nach Anspruch 1 oder 2, **dadurch gekennzeichnet, dass** die erste Geschwindigkeit von der Vortriebsgeschwindigkeit abhängt, beispielsweise linear.

4. Kombination nach einem der vorhergehenden Ansprüche, **dadurch gekennzeichnet, dass** der Erntevorsatz (20') ein Maiserntegerät ist, wobei der Aufnahmeförderer (34, 34', 34") eine Mäh- und Einzugstrommel ist, aufgebaut aus einer um eine etwa vertikale Achse rotierenden Schneidscheibe und einer darüber angeordneten, koaxialen Fördertrommel mit um den Umfang verteilten Aussparungen zur Aufnahme von Maisstängeln, und der Abgabeförderer (36) eine Querförderschnecke oder eine Fördertrommel ist, die um eine etwa vertikale Achse rotiert.

5. Kombination nach einem der Ansprüche 1 bis 3, **dadurch gekennzeichnet, dass** der Erntevorsatz (20) eine Pick-Up ist, wobei der Aufnahmeförderer (34) ein Zinkenförderer und der Abgabeförderer (36) eine Querförderschnecke ist.

6. Kombination nach einem der Ansprüche 1 bis 3, **dadurch gekennzeichnet, dass** der Erntevorsatz (20) ein Schneidwerk ist, wobei der Aufnahmeförderer eine Haspel und das Abgabeelement eine Querförderschnecke ist.

7. Kombination nach einem der vorhergehenden Ansprüche, **dadurch gekennzeichnet, dass** die Erntemaschine (20) ein Feldhäcksler ist, dessen Häckseleinrichtung mit im Wesentlichen konstanter Geschwindigkeit angetrieben wird, so dass die Geschwindigkeit des Einzugsförderers (42) die Schnittlänge definiert.

8. Kombination nach einem der vorhergehenden Ansprüche, **dadurch gekennzeichnet, dass** der Aufnahmeförderer (34) und/oder der Abgabeförderer (36) durch ein Planetengetriebe antreibbar sind, und dass zur Bereitstellung der ersten und/oder zweiten Geschwindigkeit ein weiteres Element des Planetengetriebes durch einen fremdkraftbetriebenen Motor (128, 144, 290) antreibbar ist.

9. Kombination nach Anspruch 8, **dadurch gekennzeichnet, dass** das Planetengetriebe zum Antrieb des Aufnahmeförderers (34) an der Erntemaschine (10) angeordnet und durch eine lösbare mechanische Antriebsverbindung mit dem Aufnahmeförderer (34) verbunden ist.

10. Kombination nach Anspruch 8 oder 9, **dadurch gekennzeichnet, dass** das Planetengetriebe zum Antrieb des Abgabeförderers (36) am Erntevorsatz (20) angeordnet ist und vom Antriebsstrang des Aufnahmeförderers (34) angetrieben wird.

## Claims

1. A combination of an agricultural harvesting machine (10) and a harvesting header (20, 20'), with:
a receiving conveyor (34) of the harvesting header (20, 20') which is operable to receive harvested crop at a first, variable speed,
a discharge conveyor (36) of the harvesting header (20, 20'), which is operable to accept harvested crop received from the receiving conveyor (34) at a second variable speed, to convey it and deliver it, and
an infeed conveyor (42) which is arranged in an infeed channel of the harvesting machine (10) and is operable to accept harvested crop from the discharge conveyor (36) at a third variable speed, to convey it and deliver it to a crop processing device (22), wherein the third speed is independent of the first speed,
**characterized in that** the second speed depends on the first and third speeds and lies between the first and third speeds.

2. A combination according to claim 1, **characterized in that** the second speed lies approximately in the middle between the first and third speeds.

3. A combination according to claim 1 or 2, **characterized in that** the first speed depends on the speed of propulsion, for example linearly.

4. A combination according to any of the preceding claims, **characterized in that** the harvesting header (20') is a maize harvesting implement, wherein the receiving conveyor (34, 34', 34") is a mowing and infeed drum, constructed from a cutting disc rotating about an approximately vertical axis and a feed drum arranged coaxially above this, with recesses distributed round its periphery for receiving maize stalks, and the discharge conveyor (36) is a transverse conveyor auger or a conveyor drum which rotates about and approximately vertical axis.

5. A combination according to any of claims 1 to 3, **characterized in that** the harvesting header (20) is a pick-up, wherein the receiving conveyor (34) is a tine conveyor and the discharge conveyor (36) is a transverse auger conveyor.

6. A combination according to any of claims 1 to 3, **characterized in that** the harvesting header (20) is a cutter mechanism, wherein the receiving conveyor is a reel and the discharge element is a transverse auger conveyor.

7. A combination according to any of the preceding claims, **characterized in that** the harvesting machine (10) is a forage harvester whose chopper device is driven at a substantially constant speed, so that the speed of the infeed conveyor (42) defines the cut length.

8. A combination according to any of the preceding claims, **characterized in that** the receiving conveyor (34) and/or the discharge conveyor (36) is/are drivable by a planetary gear and **in that** a further element of the planetary gear can be driven by a motor (128, 144, 290) operated by separate power.

9. A combination according to claim 8, **characterized in that** the planetary gear for driving the receiving conveyor (34) is arranged on the harvesting machine (10) and is connected to the receiving conveyor (34) by a releasable mechanical drive connection.

10. A combination according to claim 8 or 9, **characterized in that** the planetary gear for driving the discharge conveyor (36) is arranged on the harvesting header (20) and is driven from the drive train of the receiving conveyor (34).

## Revendications

1. Combinaison formée par une machine de récolte (10) agricole et un outil frontal de récolte (20, 20'), comportant :
un convoyeur-ramasseur (34) de l'outil frontal de récolte (20, 20'), qui peut être actionné pour ramasser des végétaux avec une première vitesse variable,
un convoyeur de transfert (36) de l'outil frontal de récolte (20, 20'), qui peut être actionné pour recevoir, transporter et transférer avec une deuxième vitesse variable les végétaux ramassés par le convoyeur-ramasseur (34),
un convoyeur d'admission (42), qui est monté dans le conduit d'admission de la machine de récolte (10) et qui peut être actionné pour recevoir, transporter et transférer à un dispositif de traitement de la récolte (22) avec une troisième vitesse variable les végétaux reçus du convoyeur de transfert (36), la troisième vitesse étant indépendante de la première vitesse,
**caractérisée en ce que** la deuxième vitesse dépend de la première et de la troisième vitesse et se situe entre la première et la troisième vitesse.

2. Combinaison selon la revendication 1, **caractérisée en ce que** la deuxième vitesse se situe à peu près au milieu entre la première et la troisième vitesse.

3. Combinaison selon la revendication 1 ou 2, **caractérisée en ce que** la première vitesse dépend, par exemple linéairement, de la vitesse d'avancement.

4. Combinaison selon l'une quelconque des revendications précédentes, **caractérisée en ce que** l'outil frontal de récolte (20') est un outil de récolte du maïs, le convoyeur-ramasseur (34, 34', 34") étant un tambour de coupe et de ramassage, formé par un disque de coupe tournant autour d'un axe sensiblement vertical et par un tambour de transport coaxial, monté au-dessus de celui-ci et comportant des évidements répartis sur le pourtour pour recevoir les tiges de maïs, et le convoyeur de transfert (36) est une vis de transport transversale ou un tambour de transport qui tourne autour d'un axe sensiblement vertical.

5. Combinaison selon l'une quelconque des revendications 1 à 3, **caractérisée en ce que** l'outil frontal de récolte (20) est un ramasseur, le convoyeur-ramasseur (34) étant un convoyeur à dents et le convoyeur de transfert (36) étant une vis de transport transversale.

6. Combinaison selon l'une quelconque des revendications 1 à 3, **caractérisée en ce que** l'outil frontal de récolte (20) est un mécanisme de coupe, le convoyeur-ramasseur étant un rabatteur et l'élément de transfert étant une vis de transport transversale.

7. Combinaison selon l'une quelconque des revendications précédentes, **caractérisée en ce que** la machine de récolte (10) est une ensileuse, dont le dispositif de hachage est actionné avec une vitesse sensiblement constante, de telle sorte que la vitesse du convoyeur d'admission (42) définit la longueur de coupe.

8. Combinaison selon l'une quelconque des revendications précédentes, **caractérisée en ce que** le convoyeur-ramasseur (34) et/ou le convoyeur de transfert (36) peuvent être actionnés par un engrenage planétaire, et **en ce que**, pour fournir la première et/ou la deuxième vitesse, un élément supplémentaire de l'engrenage peut être actionné par un moteur (128, 144, 290) actionné par une force extérieure.

9. Combinaison selon la revendication 8, **caractérisée en ce que** l'engrenage planétaire pour actionner le convoyeur-ramasseur (34) est monté sur la machine de récolte (10) et est relié au convoyeur-ramasseur (34) par une liaison d'entraînement mécanique amovible.

10. Combinaison selon la revendication 8 ou 9, **caractérisée en ce que** l'engrenage planétaire pour actionner le convoyeur de transfert (36) est monté sur l'outil frontal de récolte (20) et est actionné par la ligne de transmission du convoyeur-ramasseur (34).
